# EUROPÄISCHE PATENTSCHRIFT

(11) **EP 1 646 557 B1**
(45) Veröffentlichungstag und Bekanntmachung des Hinweises auf die Patenterteilung: **21.03.2007**
(21) Anmeldenummer: 04763269.0
(22) Anmeldetag: 15.07.2004
(51) Int. Cl.: B64C 1/20, B64C 1/22, B64C 1/00, B64D 9/00

(54) **FLUGZEUG**
AIRCRAFT
AERONEF

(30) Priorität: 18.07.2003 DE 10332798; 27.08.2003 DE 10339507; 27.08.2003 DE 10339508; 08.03.2004 DE 4011163; 08.03.2004 DE 4011164
(43) Veröffentlichungstag der Anmeldung: 19.04.2006
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2004/007921
(87) Internationale Veröffentlichungsnummer: WO 2005/012084

(56) Entgegenhaltungen:
- DE-A- 2 162 042
- US-A- 3 381 921
- US-A- 4 929 133

## Beschreibung

Die Erfindung betrifft ein Flugzeug nach dem Oberbegriff des Patentanspruches 1 sowie ein Verfahren zur Herstellung eines Flugzeugs nach dem Oberbegriff des Patentanspruchs 18.

Flugzeuge werden üblicherweise mit einem Frachtraum ausgestattet, dessen Frachtraumboden über Stützelemente, insbesondere Floorbeams, am Körper bzw. an einer Haut des Flugzeugs abgestützt ist. Im Frachtraum wird nicht nur Ladung, z.B. Gepäck der Passagiere, verstaut, es werden vielmehr auch Funktionsbaugruppen, z.B. Wassertanks, Abwassertanks, EE-Racks oder dgl. Elektronikbaugruppen dort fest angebracht. Der Einbau dieser Funktionsbaugruppen sowie ihr Austausch sind aufwendig.

Aus der US-3,381,921 ist ein Flugzeug der eingangs genannten Art bekannt, bei welchem Paletten, auf denen eine Sitzausrüstung montiert ist, in den Frachtraum eines Flugzeugs eingefahren und dort fixiert werden können. Die Stabilität dieser Anordnung ist nur bedingt tauglich.

Der Erfindung liegt die Aufgabe zu Grunde, ein Flugzeug sowie ein Verfahren zum Herstellen eines Flugzeugs der eingangs genannten Art dahin gehend weiter zu bilden, dass Funktionsbaugruppen in einfachster Weise und unter Beibehaltung hoher Stabilität montierbar und demontierbar sind.

Diese Aufgabe wird dadurch gelöst, dass bei einem Flugzeug, umfassend einen Frachtraum mit einem Frachtraumboden, Stützelemente, insbesondere Floorbeams zum Abstützen des Frachtraumbodens und zum Verbinden mit einem Körper oder einer Haut des Flugzeugs, Funktionsbaugruppen, wobei die Funktionsbaugruppen Paletten oder dergleichen Stützstrukturen umfassen, um die Funktionsbaugruppen in den Frachtraum zu transportieren und die Paletten oder Funktionsbaugruppen Befestigungseinrichtungen zur festen Verbindung mit dem Frachtraumboden aufweisen, dadurch gelöst, dass der Frachtraumboden Bodenelemente umfasst, die mit den Stützelementen zu vorgefertigten Bodenmodulen verbunden sind.

Ein wesentlicher Punkt der Erfindung liegt also darin, dass die Funktionsbaugruppen, die normalerweise als fest zu montierende Bestandteile eines Flugzeugs gesehen werden, nunmehr als transportable Einheiten betrachtet werden, die je nach Bedarf in den Frachtraum hinein und aus ihm heraus transportierbar sind. Diese vollständig neue Betrachtungsweise der Funktionsbaugruppen hat nicht nur beim Bau eines Flugzeugs große Vorteile, sie führt vielmehr auch bei der Unterhaltung/Wartung eines Flugzeugs zu großen Erleichterungen. Insbesondere können die Funktionsbaugruppen nämlich außerhalb des Flugzeugs für sich alleine gewartet, verändert oder repariert werden, also in einem Umfeld, das ein wesentlich bequemeres Arbeiten ermöglicht als der enge Frachtraum eines Flugzeugs. Darüber hinaus können an den Funktionsbaugruppen andere Arbeitstechniken Verwendung finden, als sie innerhalb des (beengten) Frachtraums, also am Einbauort der Funktionsbaugruppen normalerweise Verwendung finden können. Weiterhin umfasst der Frachtraumboden Bodenelemente, die mit den Stützelementen zu vorgefertigten Bodenmodulen verbunden sind. Auf diese Weise ist eine Montage des Frachtraumbodens samt den dazugehörigen Stützelementen außerhalb des Flugzeugs möglich, was die oben genannten Vorteile ebenfalls mit sich bringt und eine hohe Stabilität sichert.

Vorzugsweise weisen die Paletten bzw. die Funktionsbaugruppen und/oder der Frachtraumboden Anschlußeinrichtungen auf, um Verbindungsleitungen oder dgl. Funktionseinrichtungen der Funktionsbaugruppen an entsprechende Verbindungsleitungen des Flugzeugs anzuschließen. Im Falle eines Wassertanks als Funktionsbaugruppe sind derartige Anschlußeinrichtungen Muffen und Schlauchstücke, über welche die notwendigen Verbindungen zu den Wasser-/Abwasserleitungen des Flugzeugs geschaffen werden. Im Falle von EE-Racks sind dies kompliziertere Strukturen der Flugzeug-Verkabelung.

Der Frachtraum ist vorzugsweise mit Führungseinrichtungen ausgestattet zum Führen der Funktionsbaugruppen beim Hineintransportieren innerhalb des Frachtraums. Derartige Führungseinrichtungen können die auch für Fracht-Paletten verwendeten Führungen auf dem Frachtraumboden sein. Es können aber auch gesonderte Führungseinrichtungen vorgesehen werden, um die Funktionsbaugruppen zumindest in den Abschnitten, in denen sie endgültig befestigt werden sollen, an besondere Stellen zu führen.

Die Führungseinrichtungen können auch Führungsschienen an Seitenwänden und/oder an der Decke des Frachtraums umfassen, was insbesondere dann sinnvoll ist, wenn die Funktionsbaugruppen über die volle Höhe und/oder Breite des Frachtraums reichen. Dies ist insbesondere dann der Fall, wenn die Paletten mindestens Abschnitte von Trennwänden umfassen, die an ihnen montiert sind oder an ihnen montierbar sind. Derartige Trennwände als Bestandteil der Funktionsbaugruppen zu sehen, ist ebenfalls ein wesentlicher Gedanke, der für sich alleine gesehen neu ist. Dann, wenn Trennwände (oder Abschnitte hiervon) auf Paletten montiert sind, kann man sie besonders leicht verschieben, um im Frachtraum Abteile zur besonderen Verwendung zu schaffen bzw. bestehende Abteile zu vergrößern oder zu verkleinern.

Man kann nun Funktionsbaugruppen an Abschnitten (oder ganzen) Trennwänden montieren, wie dies im Prinzip auch bisher schon bei der Montage einiger Funktionsbaugruppen üblich ist. Im vorliegenden Fall bilden dann aber die Trennwände zusammen mit den Funktionsbaugruppen auf ihren Paletten gesonderte Bauelemente, deren Montage außerhalb des Flugzeugs erleichtert ist und die dann in einfacher Weise in den Frachtraum hineingefahren und dort befestigt werden können. Die Trennwände weisen vorzugsweise hierbei Dichteinrichtungen zum Abdichten gegenüber dem Frachtraum auf, so dass eine Befüllung des Frachtraums mit Löschgas im Falle eines Brandes ohne weiteres möglich ist.

Vorzugsweise sind hierbei Abschnitte von Kabelkanälen, Hydraulikleitungen, Wasserleitungen, Stromleitungen oder dgl. Leitungseinrichtungen in den Bodenmodulen derart vorgesehen, dass sie mit gleichartigen Leitungseinrichtungen benachbarter Bodenmodule Gesamtleitungssysteme bilden, wenn die Bodenmodule im Flugzeug montiert sind. Auf diese Weise bilden die Bodenmodule gleichzeitig auch Abschnitte der Leitungseinrichtungen, wobei Abzweige zur Verbindung mit vorbestimmten Stellen der Bodenelemente und/oder der Funktionsbaugruppen vorgesehen sind, wenn dies erwünscht ist. Dadurch wird der Aufbau von Leitungssystemen innerhalb des Flugzeugs erheblich erleichtert. Insgesamt sollen also die Bodenmodule bei dieser Ausführungsform der Erfindung nicht nur die komplette Verkabelung und Drainage usw. für die Organe des Frachtladesystems beinhalten, sondern sollen vorzugsweise auch das komplette "Ducting" für das gesamte Flugzeug, z.B. die Klimaanlage oder andere Verkabelungen aufweisen, welche in diesem Bereich des Flugzeugs normalerweise nur hindurchgeführt werden. Damit wird eine erheblich effizientere Arbeitsweise beim Aufbau des gesamten Flugzeugs erreicht.

Vorzugsweise sind die Montageelemente an den Bodenelementen zum mechanisch festen Verbinden von benachbarten Bodenelementen bei oder nach der Montage im Flugzeug vorgesehen. Es ist auf diese Weise möglich, die Bodenelemente zu einer festen, stabilen und steifen Fläche zu verbinden, welche dem gesamten Flugzeug erhöhte Stabilität verleiht und den Frachtraumboden erheblich verstärkt.

Die Bodenelemente umfassen ebenso wie die Trennwände vorzugsweise Dichtungseinrichtungen zum Abdichten eines Raums oberhalb der Bodenelemente gegenüber einem Raum unterhalb der Bodenelemente. Dieses Abdichten geschieht zum einen gegenüber Flüssigkeiten, z.B. Wasser, das mit eingeladenen Containern in den Frachtraum eingetragen wird, zum anderen gegenüber Gasen, wie sie zum Löschen von Feuer verwendet werden, so dass der Frachtraum zum Ersticken von Feuer mit einem inerten Gas gefüllt werden kann. Diese Dichteinrichtungen sind besonders einfach (z.B. in Form einer aufgespritzten Schicht) anzubringen, da ja die Bodenmodule außerhalb des Frachtraumes montiert werden und darum von unten zugänglich sind.

Vorzugsweise werden Dicht-Verbindungselemente zum dichten Verbinden der Bodenelemente mit benachbarten Bodenelementen und/oder der Haut des Flugzeugs vorgesehen. Diese Dichtelemente sind insbesondere so aufgebaut, dass nach dem Einbau eines Bodenmoduls das Bodenelement dieses Moduls mit dem benachbarten Bodenelement sowie mit dem Frachtraum abdichtet und eine gesonderte, nachträgliche Abdichtung entfallen kann.

Vorzugsweise sind Entwässerungseinrichtungen zum Abführen von Flüssigkeit aus dem Frachtraum und zum Überleiten der Flüssigkeit in entsprechende Entwässerungseinrichtungen benachbarter Bodenmodule vorgesehen, so dass ein gesondertes Anbringen von Leitungen zum Ableiten des Wassers nicht notwendig ist.

Die Bodenmodule sind weiterhin mit Isolierungseinrichtungen zum Isolieren einer unteren Rumpfhalbschale versehen. Dadurch muss man die Isolierung nicht nachträglich aufbringen, man kann sie vielmehr außerhalb des Flugzeugs an den Modulen montieren. Diese Isolierungseinrichtungen können entweder unter den Bodenelementen angebracht werden, was insbesondere außerhalb des Flugzeugs sehr einfach zu bewerkstelligen ist, oder aber (gegebenenfalls auch zusätzlich) im Bereich der Stützelemente, nahe der Haut angebracht werden, wenn dies erwünscht wird. Es sind somit Arbeiten im engen, unter dem Frachtraumboden liegenden Bereich des Flugzeugs nicht notwendig.

Die Bodenmodule umfassen auch Bulkheads oder dgl. Trennwände oder aber Befestigungseinrichtungen zum Befestigen von Trennwänden, wie sie in bestimmten Frachtraum-Abschnitten (wie oben erläutert) üblicherweise nachträglich montiert werden. Die Trennwände können also entweder schon an den Bodenmodulen befestigt oder auf Paletten befestigt und dann in den Frachtraum eingeschoben werden. Die Trennwände bestehen vorzugsweise mindestens teilweise aus ballistisch wiederstandsfähigem Material, so dass eine höhere Sicherheit gewährleistet ist. Die Bodenmodule können weiterhin Wandverkleidungen und/oder Deckenverkleidungen oder dgl. Verkleidungselemente oder Montageeinrichtungen hierfür umfassen, zum Auskleiden des Frachtraums. Dies ermöglicht ebenfalls einen vereinfachten Aufbau eines Flugzeugs.

Die oben genannte Aufgabe wird verfahrensmäßig bei einem Flugzeug, umfassend einen Frachtraum mit einem Frachtraumboden, Stützelemente, insbesondere Floorbeams zum Abstützen des Frachtraumbodens und zum Verbinden mit einem Körper oder einer Haut des Flugzeugs sowie Funktionsbaugruppen, insbesondere Wassertanks, Abwassertanks, EE-Racks oder dgl. Elektronikbaugruppen dadurch gelöst, dass die Funktionsbaugruppen außerhalb des Flugzeugs auf Paletten oder dgl. Stützstrukturen montiert werden, die montierten Funktionsbaugruppen in das Flugzeug eingeladen und auf dem Frachtraumboden an einen Bestimmungsort im Frachtraum gefahren werden und die montierten Funktionsbaugruppen am Bestimmungsort am Frachtraumboden befestigt werden. Die oben bereits erläuterten Vorteile sind bei diesem Verfahren evident.

Vorzugsweise werden an den Paletten oder an den Funktionsbaugruppen außerhalb des Flugzeugs mindestens Abschnitte von Trennwänden montiert, so dass die Einbauarbeiten weiterhin erleichtert werden.

Bevorzugte Ausführungsformen der Erfindung ergeben sich aus den Unteransprüchen.

Nachfolgend werden bevorzugte Ausführungsformen der Erfindung anhand von Abbildungen näher erläutert. Hierbei zeigen
- Fig. 1: eine perspektivische Teildarstellung eines Flugzeugrumpfes mit einem großenteils montierten Frachtraumboden,
- Fig. 2: ein Beispiel einer Funktionsbaugruppe, in diesem Fall eines Tanks,

- Fig. 3: ein weiteres Beispiel einer Funktionsbaugruppe, hier eines EE-Racks mit daran angebrachter Trennwand,
- Fig. 4: eine perspektivische Darstellung eines Bodenmoduls,
- Fig. 5: eine perspektivische Darstellung eines Bodenmoduls mit darauf über Paletten montierten Funktionsbaugruppen,
- Fig. 6: einen Teilabschnitt eines Bodenmoduls von unten, und
- Fig. 7: einen Teilabschnitt eines Bodenmoduls mit Verbindungsleitungen und Übergabesteckern.

In der nachfolgenden Beschreibung werden für gleiche und gleich wirkende Teile dieselben Bezugsziffern verwendet.

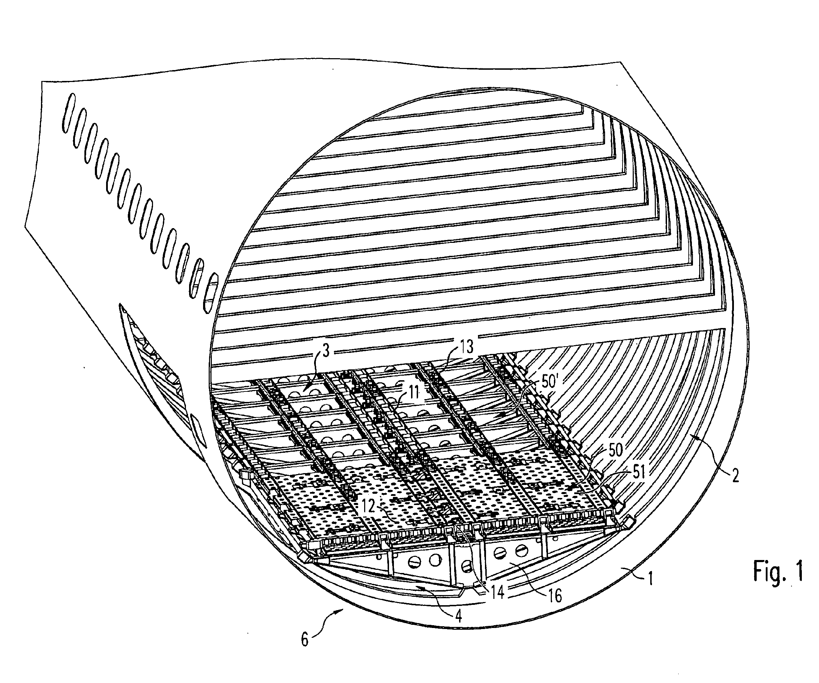

Gemäß Fig. 1 schließt ein Körper bzw. eine (Außen-)Haut 1 eines Flugzeugs in seiner unteren Rumpfhalbschale 6 einen Frachtraum 2 ein, in welchem Bodenelemente 51 einen Frachtraumboden 3 bilden, unter dem sich ein Bilgenraum 4 befindet. Die Bodenelemente 51 sind an Stützelementen, sogenannten Floorbeams 16 befestigt, die wiederum an der Haut 1 des Flugzeugs befestigt sind.

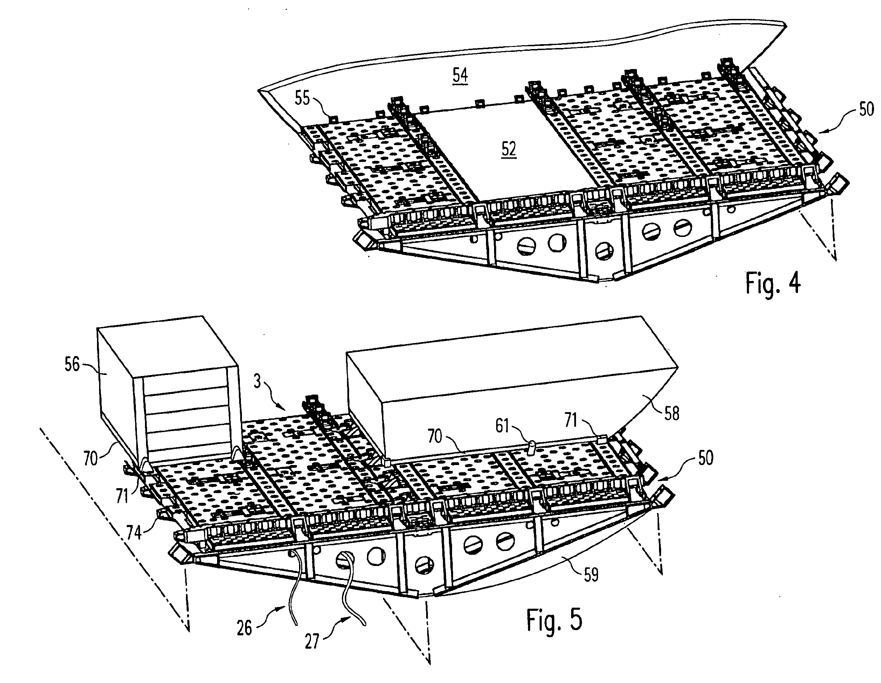

Auf bzw. an den Bodenelementen 51 sind begehbare Flächen, sogenannte Floorpanels 52 (siehe Fig. 4) sowie die üblichen Elemente für die Beförderung und das Verzurren von Ladung angebracht, nämlich Rollenelemente 11, Kugelelemente 12, Riegelelemente 13 und Rollenantriebseinheiten, sogenannte PDUs 14, wie dies allgemein üblich ist.

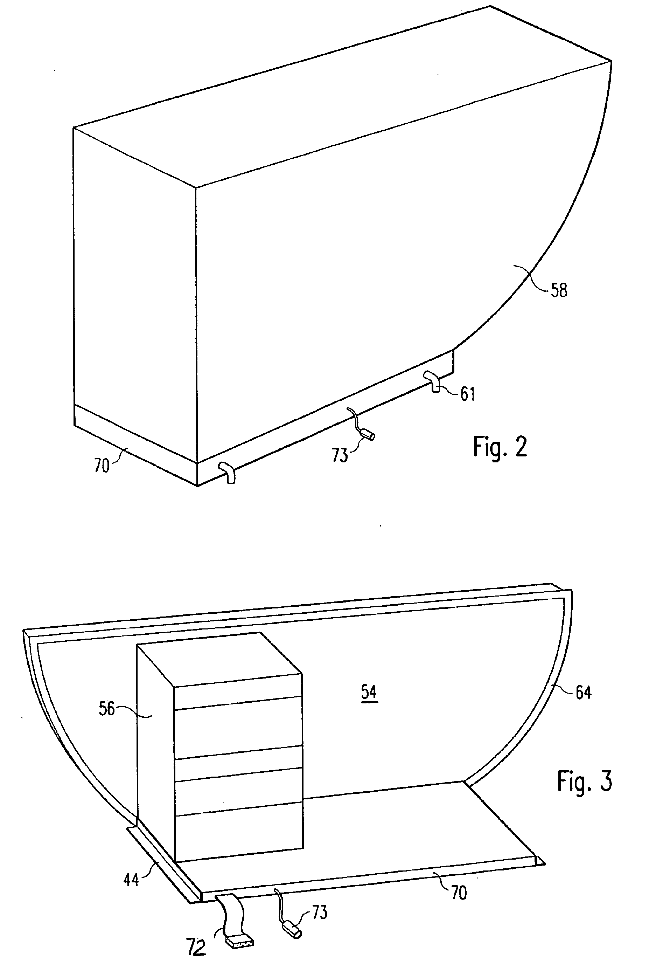

Um nun im Frachtraum 3 Funktionselemente, z.B. einen in Fig. 2 gezeigten Wassertank 58 oder ein in Fig. 3 gezeigtes EE-Rack 56 zu montieren, sind diese Funktionselemente, also der Wassertank 58 bzw. das EE-Rack 56 auf einer tragenden Struktur 70, z.B. einer Palette montiert. Die Funktionselemente sind weiterhin mit den entsprechenden Anschlüssen versehen, also z.B. beim Tank gemäß Fig. 2 mit einem Wasseranschluß 61 und einer elektrischen Verbindungsleitung 73 (zum Steuern von Ventilen) bzw. - im Falle des EE-Racks gemäß Fig. 3 - mit ebensolchen elektrischen Verbindungsleitungen 73.

Bei der in Fig. 3 gezeigten Ausführungsform ist das EE-Rack 56 nicht alleine auf der Palette 70 montiert, es ist vielmehr auch noch eine Trennwand 54 mit Abdichteinrichtungen 64 auf der Palette 70 montiert, so dass eine Befestigung des EE-Racks an der Trennwand 54 außerhalb des Flugzeugs möglich ist.

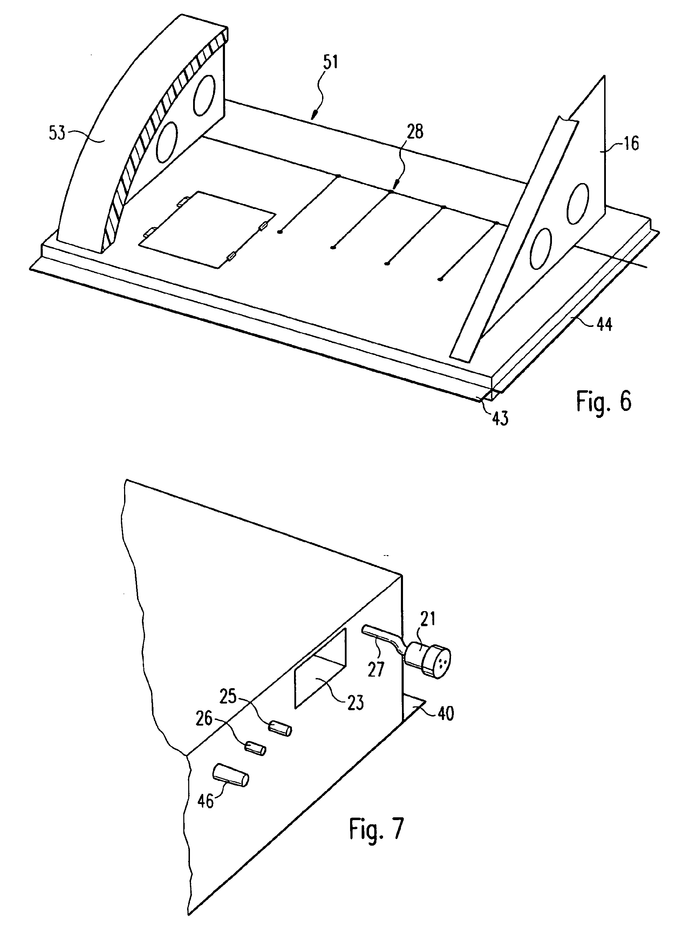

Wenn die Funktionselemente 56, 58 auf ihren Stützstrukturen, den Paletten 70 in den Frachtraum 3 eingefahren werden, so dienen hierzu die für Fracht (Container, Paletten oder dgl.) vorgesehenen Rollenelemente 11, Kugelelemente 12 und PDUs 14. Es können dann, wenn die Funktionsbaugruppen am Bestimmungsort im Frachtraum angelangt sind, entweder die auch für Fracht vorgesehenen Riegelelemente 13 zum Festmachen der Funktionsbaugruppen verwendet werden, oder aber gesonderte Befestigungseinrichtungen 71, wie sie in Fig. 5 gezeigt sind. Nach der Befestigung auf dem Frachtraumboden 3 werden dann die Anschlüsse 61 bzw. Verbindungsleitungen 73 mit entsprechenden Anschlüssen und Verbindungsleitungen auf dem Frachtraumboden oder unter dem Frachtraumboden (über entsprechende Zugangsöffnungen) verbunden. Dann, wenn der Frachtraumboden aus Modulen besteht, so sind Übergabestecker 21 an Stromleitungen 27, Kabelkanälen 23, Hydraulikleitungen 25, Wasserleitungen 26 und entsprechende Abzweige 28 vorgesehen, um derartige elektrische, hydraulische oder andersartige Verbindungen zu entsprechenden Funktionsbaugruppen zu schaffen und darüber hinaus vorzugsweise das gesamte Ducting des Flugzeugs zu bewerkstelligen. Derartige Verbindungsleitungen usw. sind insbesondere in den Fig. 6 und 7 gezeigt. Darüber hinaus ist in Fig. 6 auch eine Isolierung 53 angedeutet, mit welcher der Frachtraum 3 bzw. der Bilgenraum 4 gegenüber der unteren Rumpfhalbschale 6 thermisch isoliert werden kann. Weiterhin sind in den Fig. 6 und 7 Dichteinrichtungen 40 sowie Dichtverbindungselemente 43 und 44 gezeigt, die dazu dienen, den Frachtraumboden gegenüber der Haut 1 abzudichten.

Zum Entwässern des Frachtraumbodens sind entsprechende Öffnungen vorgesehen, die in Entwässerungsleitungen 46 münden.

Die Trennwände 54 können - wie in Fig. 4 gezeigt - nicht nur wie bei der in Fig. 3 gezeigten Ausführungsform direkt auf den Paletten 70 montiert sein, sie können vielmehr über gesonderte Montageeinrichtungen 55 am Frachtraumboden 3 befestigt werden.

Weiterhin wird die Montage der Funktionsbaugruppen im Frachtraum 3 durch Führungseinrichtungen 74 auf dem Frachtraumboden 3 (siehe Fig. 5) erleichtert, die dazu dienen, die Funktionsbaugruppen auf ihren Paletten 70 an exakt den Platz zu fahren, an welchem sie später montiert werden sollen und an welchem die entsprechenden Anschlußeinrichtungen (für Signalleitungen, Wasserleitungen usw.) vorgesehen sind.

### Bezugszeichenliste

- 1: Körper/Haut
- 2: Frachtraum
- 3: Frachtraumboden
- 4: Bilgenraum
- 6: untere Rumpfhalbschale
- 11: Rollenelement
- 12: Kugelelement
- 13: Riegelelement
- 14: PDU
- 16: Floorbeam
- 21: Übergabestecker
- 23: Kabelkanal
- 25: Hydraulikleitung
- 26: Wasserleitung
- 27: Stromleitung
- 28: Abzweig
- 30: Montageelement
- 40: Dichteinrichtung
- 43: Dicht-Verbindungselement
- 44: Dicht-Verbindungselement
- 46: Entwässerung
- 50, 50': Bodenmodul
- 51, 51': Bodenelement
- 52: begehbare Fläche
- 53: Isolierung
- 54: Trennwand
- 55: Befestigungseinrichtung Trennwand
- 56: EE-Rack
- 58: Wassertank
- 61: Wasseranschluß
- 64: Abdichteinrichtung
- 70: Palette
- 71: Befestigungseinrichtung
- 72: Elektrischer Anschluß
- 73: Verbindungsleitung
- 74: Führungseinrichtung

## Patentansprüche

1. Flugzeug, umfassend
- einen Frachtraum (2) mit einem Frachtraumboden (3);
- Stützelemente (16), insbesondere Floorbeams zum Abstützen des Frachtraumbodens (3) und zum Verbinden mit einem Körper oder einer Haut (1) des Flugzeugs;
- Funktionsbaugruppen (56, 58, 59),
wobei
die Funktionsbaugruppen (56, 58, 59) Paletten (70) oder dgl. Stützstrukturen umfassen, um die Funktionsbaugruppen (56, 58, 59) in den Frachtraum (2) zu transportieren, und die Paletten (70) Befestigungseinrichtungen (71) zur festen Verbindung mit dem Frachtraumboden (3) aufweisen,
**dadurch gekennzeichnet,**
**dass** der Frachtraumboden (3) Bodenelemente (51,51') umfasst, die mit den Stützelementen (16) zu vorgefertigten Bodenmodulen (50,50') verbunden sind.

2. Flugzeug nach Anspruch 1,
**dadurch gekennzeichnet, dass**
die Paletten (70) und/oder der Frachtraumboden (3) Anschlußeinrichtungen (61, 72) aufweisen, um Verbindungsleitungen (73) oder dergleichen Funktionseinrichtungen der Funktionsbaugruppen (56, 58, 59) an entsprechende Verbindungsleitungen (26, 27) des Flugzeugs anzuschließen.

3. Flugzeug nach einem der vorherigen Ansprüche,
**dadurch gekennzeichnet, dass**
der Frachtraum (2) mit Führungseinrichtungen (74) ausgestattet ist zum Führen der Funktionsbaugruppen beim Hineintransportieren innerhalb des Frachtraums (2).

4. Flugzeug nach einem der vorherigen Ansprüche, insbesondere nach Anspruch 3,
**dadurch gekennzeichnet, dass**
die Führungseinrichtungen (74) Führungsschienen an Seitenwänden und/oder an einer Decke des Frachtraums umfassen.

5. Flugzeug nach einem der vorherigen Ansprüche,
**dadurch gekennzeichnet, dass**
an den Paletten (70) mindestens Abschnitte von Trennwänden (54) montierbar oder montiert sind.

6. Flugzeug nach einem der vorherigen Ansprüche,
**dadurch gekennzeichnet, dass**
die Funktionsbaugruppen (56, 58, 59) mindestens an Abschnitten von Trennwänden (54) montierbar oder montiert sind.

7. Flugzeug nach einem der vorherigen Ansprüche, insbesondere einem der Ansprüche 5 oder 6,
**dadurch gekennzeichnet, dass**
die Trennwände (54) Dichteinrichtungen (64) zum Abdichten gegenüber dem Frachtraum (2) aufweisen.

8. Flugzeug nach einem der vorherigen Ansprüche,
**dadurch gekennzeichnet, dass**
Abschnitte von Kabelkanälen (23), Hydraulikleitungen (25), Wasserleitungen (26), Stromleitungen (27) oder dgl. Leitungseinrichtungen in den Bodenmodulen (50) derart vorgesehen sind, dass sie mit gleichartigen Leitungseinrichtungen benachbarter Bodenmodule (50') Gesamtleitungssysteme bilden, wenn die Bodenmodule (50,50') im Flugzeug montiert sind.

9. Flugzeug nach einem der vorherigen Ansprüche, insbesondere nach Anspruch 8,
**dadurch gekennzeichnet, dass**
die Leitungseinrichtungen (23,25-27) Abzweige (28) zur Verbindung mit vorbestimmten Stellen der Bodenelemente (51) und/oder der Funktionsbaugruppen (56, 58, 59) aufweisen.

10. Flugzeug nach einem der vorherigen Ansprüche,
**dadurch gekennzeichnet, dass**
Montageelemente (30) an den Bodenmodulen (50) oder Bodenelementen (51) zum mechanisch festen Verbinden von benachbarten Bodenmodulen (50') oder Bodenelementen (51') bei oder nach der Montage im Flugzeug vorgesehen sind.

11. Flugzeug nach einem der vorherigen Ansprüche, ,
**dadurch gekennzeichnet, dass**
die Bodenelemente (51) Dichteinrichtungen (40) umfassen zum Abdichten eines Raumes oberhalb gegenüber einem Raum unterhalb der Bodenelemente (51).

12. Flugzeug nach einem der vorherigen Ansprüche, ,
**dadurch gekennzeichnet, dass**
Dicht-Verbindungselemente (43,44) vorgesehen sind, zum dichten Verbinden der Bodenelemente (51) mit benachbarten Bodenelementen (51') und/oder der Haut (1) des Flugzeugs.

13. Flugzeug nach einem der vorherigen Ansprüche,
**dadurch gekennzeichnet, dass**
Entwässerungseinrichtungen (46) vorgesehen sind, zum Abführen von Flüssigkeit aus dem Frachtraum (2) und zum Überleiten der Flüssigkeit in entsprechende Entwässerungseinrichtungen benachbarter Bodenmodule (50').

14. Flugzeug nach einem der vorherigen Ansprüche,
**dadurch gekennzeichnet, dass**
die Bodenmodule (50) Isolierungseinrichtungen (53) zum Isolieren einer unteren Rumpfhalbschale (6) umfassen.

15. Flugzeug nach einem der vorherigen Ansprüche, insbesondere nach Anspruch 14,
**dadurch gekennzeichnet, dass**
die Isolierungseinrichtung (53) unter den Bodenelementen (51) und/oder im Bereich der Stützelemente (16) nahe der Haut (1) angebracht sind.

16. Flugzeug nach einem der vorherigen Ansprüche,
**dadurch gekennzeichnet, dass**
die Bodenmodule (50) Bulkheads oder dergleichen Trennwände (54) oder Befestigungseinrichtungen (55) zum Befestigen von Trennwänden (54) umfassen.

17. Flugzeug nach einem der vorherigen Ansprüche,
**dadurch gekennzeichnet, dass**
die Bodenmodule (50) zu Wandverkleidungen und/oder Deckenverkleidungen oder dgl. Verkleidungselemente (62) oder Montageeinrichtungen (63) hierfür umfassen, zum Auskleiden des Frachtraums (2).

18. Verfahren zur Herstellung eines Flugzeugs, umfassend
- einen Frachtraum mit einem Frachtraumboden mit Bodenelementen;
- Stützelemente, insbesondere Floorbeams zum Abstützen des Frachtraumbodens und zum Verbinden mit einem Körper oder einer Haut des Flugzeugs;
- Funktionsbaugruppen, insbesondere Wassertanks, Abwassertanks, EE-Racks oder dgl. Elektronikbaugruppen, wobei
- die Funktionsbaugruppen außerhalb des Flugzeugs auf Paletten oder dgl. Stützstrukturen montiert werden,
- die montierten Funktionsbaugruppen in das Flugzeug eingeladen und auf dem Frachtraumboden an einen Bestimmungsort im Frachtraum gefahren werden, und
- die montierten Funktionsbaugruppen am Bestimmungsort am Frachtraumboden befestigt werden ,
**dadurch gekennzeichnet,**
**dass** die Bodenelemente mit den Stützelementen (16) zu vorgefertigten Bodenmodulen (50,50') verbunden werden.

19. Verfahren nach Anspruch 18,
**dadurch gekennzeichnet, dass**
an den Paletten oder an den Funktionsbaugruppen außerhalb des Flugzeugs mindestens Abschnitte von Trennwänden montiert werden.

## Claims

1. Aircraft comprising
- a cargo compartment (2) with a cargo compartment floor (3);
- supporting elements (16), in particular floor beams for supporting the cargo compartment floor (3) and for connecting to a body or a skin (1) of the aircraft;
- functional units (56, 58, 59),
wherein
the functional units (56, 58, 59) comprise pallets (70) or similar supporting structures to transport the functional units (56, 58, 59) into the cargo compartment (2) and the pallets (70) have fixing devices (71) to create a stable connection to the cargo compartment floor (3),
**characterised in that**
the cargo compartment floor (3) comprises floor elements (51, 51') that are connected to the supporting elements (16) to form prefabricated floor modules (50, 50').

2. Aircraft according to Claim 1,
**characterised in that**
the pallets (70) and/or the cargo compartment floor (3) have connecting devices (61, 72) to join connection leads (73) or similar functional devices of the functional units (56, 58, 59) to corresponding connection leads (26, 27) of the aircraft.

3. Aircraft according to one of the preceding claims,
**characterised in that**
the cargo compartment (2) is equipped with guide devices (74) to guide the functional units as they are transported inside the cargo compartment (2).

4. Aircraft according to one of the preceding claims, in particular according to Claim 3,
**characterised in that**
the guide devices (74) comprise guide rails along side walls and/or along a ceiling of the cargo compartment.

5. Aircraft according to one of the preceding claims,
**characterised in that**
at least sections of partitions (54) can be or are mounted on the pallets (70).

6. Aircraft according to one of the preceding claims,
**characterised in that**
the functional units (56, 58, 59) can be or are mounted on at least sections of partitions (54).

7. Aircraft according to one of the preceding claims, in particular one of the Claims 5 or 6,
**characterised in that**
the partitions (54) comprise sealing devices (64) to seal them off from the cargo compartment (2).

8. Aircraft according to one of the preceding claims
**characterised in that**
sections of cable ducts (23), hydraulic lines (25), water conduits (26), current leads (27) or similar conducting devices are provided in the floor modules (50) in such a way that together with conducting devices of the same kind in adjacent floor modules (50') they form complete conducting systems when the floor modules (50, 50') are installed in the aircraft.

9. Aircraft according to one of the preceding claims, in particular according to Claim 8,
**characterised in that**
the conducting devices (23, 25-27) have branches (28) for connection to predetermined places on the floor elements (51) and/or the functional units (56, 58, 59).

10. Aircraft according to one of the preceding claims,
**characterised in that**
assembly elements (30) are provided on the floor modules (50) or floor elements (51) for mechanically stable connection to adjacent floor modules (50') or floor elements (51') during or after installation in the aircraft.

11. Aircraft according to one of the preceding claims,
**characterised in that**
the floor elements (51) comprise sealing devices (40) for sealing off a space above the floor elements (51) from a space below them.

12. Aircraft according to one of the preceding claims,
**characterised in that**
impermeable connection elements (43, 44) are provided to create an impermeable connection between the floor elements (51) and adjacent floor elements (51') and/or the skin (1) of the aircraft.

13. Aircraft according to one of the preceding claims,
**characterised in that**
drainage devices (46) are provided to carry off liquid from the cargo compartment (2) and to transfer the liquid to corresponding drainage devices of adjacent floor modules (50').

14. Aircraft according to one of the preceding claims,
**characterised in that**
the floor modules (50) comprise insulating devices (53) for insulating the lower half of a fuselage (6).

15. Aircraft according to one of the preceding claims, in particular according to Claim 14,
**characterised in that**
the insulating devices (53) are accommodated below the floor elements (51) and/or in the region of the supporting elements (16) near the skin (1).

16. Aircraft according to one of the preceding claims,
**characterised in that**
the floor modules (50) comprise bulkheads or similar partitions (54) or fixing devices (55) for attaching partitions (54).

17. Aircraft according to one of the preceding claims,
**characterised in that**
the floor modules (50) comprise wall linings and/or ceiling linings or similar lining elements (62) or mounting devices (63) for said elements, to line the cargo compartment (2).

18. Method of manufacturing an aircraft comprising
- a cargo compartment with a cargo compartment floor with floor elements;
- supporting elements, in particular floor beams for supporting the cargo compartment floor and for connecting to a body or a skin of the aircraft;
- functional units, in particular water tanks, waste-water tanks, EE racks or similar electronic components, wherein
- the functional units are assembled outside the aircraft on pallets or similar supporting structures,
- the assembled functional units are loaded into the aircraft and are transported on the cargo compartment floor to a destination point in the cargo compartment, and
- the assembled functional units are fixed to the cargo compartment floor at the destination point,
**characterised in that**
the floor elements are connected to the supporting elements (16) to form prefabricated floor modules (50, 50').

19. Method according to Claim 18
**characterised in that**
at least sections of partitions are assembled on the pallets or on the functional units while outside the aircraft.

## Revendications

1. Aéronef comportant
- une soute (2) avec un plancher de soute (3) ;
- des éléments de support (16), en particulier des traverses de plancher, destinés à étayer le plancher (3) de la soute et destinés à être reliés à un corps ou à un fuselage (1) de l'aéronef;
- des groupes fonctionnels (56, 58, 59),
dans lequel
les groupes fonctionnels (56, 58, 59) comportent des palettes (70) ou structures de support similaires pour transporter les groupes fonctionnels (56, 58, 59) dans la soute (2), et les palettes (70) présentent des dispositifs de fixation (71) pour une liaison fixe avec le plancher de soute (3),
**caractérisé en ce que**
le plancher de soute (3) comporte des éléments de plancher (51, 51') qui sont reliés aux éléments de support (16) pour former des modules de plancher (50, 50') préfabriqués.

2. Aéronef selon la revendication 1, **caractérisé en ce que** les palettes (70) et/ou le plancher de soute (3) comportent des dispositifs de raccordement (61, 72) pour raccorder des conduites de liaison (73) ou des dispositifs fonctionnels similaires des groupes fonctionnels (56, 58, 59) à des conduites de liaison (26, 27) correspondantes de l'aéronef.

3. Aéronef selon l'une quelconque des revendications précédentes, **caractérisé en ce que** la soute (2) est équipée de dispositifs de guidage (74) destinés à guider les groupes fonctionnels lors de leur transport vers l'intérieur de la soute (2).

4. Aéronef selon l'une quelconque des revendications précédentes, en particulier selon la revendication 3, **caractérisé en ce que** les dispositifs de guidage (74) comportent des rails de guidage sur les parois latérales et/ou sur un plafond de la soute.

5. Aéronef selon l'une quelconque des revendications précédentes, **caractérisé en ce qu'**au moins des segments de cloisons (54) peuvent être montés ou sont montés sur les palettes (70).

6. Aéronef selon l'une quelconque des revendications précédentes, **caractérisé en ce que** les groupes fonctionnels (56, 58, 59) peuvent être montés ou sont montés au moins sur des segments de cloisons (54).

7. Aéronef selon l'une quelconque des revendications précédentes, en particulier selon une des revendications 5 ou 6, **caractérisé en ce que** les cloisons (54) comportent des dispositifs d'étanchéité (64) pour assurer l'étanchéité par rapport à la soute (2).

8. Aéronef selon l'une quelconque des revendications précédentes, **caractérisé en ce que** des tronçons de conduits de câbles (23), de conduites hydrauliques (25), de conduites d'eau (26), de lignes électriques (27) ou de dispositifs de conduites similaires sont prévus dans les modules de plancher (50), de telle sorte qu'ils forment, avec des dispositifs de conduites similaires dans des modules de plancher (50') adjacents, des systèmes globaux de conduites lorsque les modules de plancher (50, 50') sont montés dans l'aéronef.

9. Aéronef selon l'une quelconque des revendications précédentes, en particulier selon la revendication 8, **caractérisé en ce que** les dispositifs de conduite (23, 25-27) présentent des dérivations (28) destinées à être reliées à des emplacements prédéterminés des éléments de plancher (51) et/ou des groupes fonctionnels (56, 58, 59).

10. Aéronef selon l'une quelconque des revendications précédentes, **caractérisé en ce que** des éléments de montage (30) sont prévus sur les modules de plancher (50) ou sur les éléments de plancher (51) pour l'assemblage mécaniquement fixe de modules de plancher (50') adjacents ou d'éléments de plancher (51') adjacents pendant ou après le montage dans l'aéronef.

11. Aéronef selon l'une quelconque des revendications précédentes, **caractérisé en ce que** les éléments de plancher (51) comportent des dispositifs d'étanchéité (40) pour étancher un compartiment au-dessus de l'élément de plancher (51) par rapport à un compartiment au-dessous de l'élément de plancher (51).

12. Aéronef selon l'une quelconque des revendications précédentes, **caractérisé en ce qu'**il est prévu des éléments d'assemblage et d'étanchéité (43, 44) pour une liaison étanche des éléments de plancher (51) avec des éléments de plancher (51') adjacents et/ou avec le fuselage (1) de l'aéronef.

13. Aéronef selon l'une quelconque des revendications précédentes, **caractérisé en ce qu'**il est prévu des dispositifs de drainage (46) pour évacuer un liquide hors de la soute (2) et pour transférer le liquide dans des dispositifs de drainage de modules de plancher (50') adjacents.

14. Aéronef selon l'une quelconque des revendications précédentes, **caractérisé en ce que** les modules de plancher (50) comportent des dispositifs d'isolation (53) destinés à isoler une demi-coque de fuselage inférieure (6).

15. Aéronef selon l'une quelconque des revendications précédentes, en particulier selon la revendication 14, **caractérisé en ce que** les dispositifs d'isolation (53) sont disposés en dessous des éléments de plancher (51) et/ou dans la zone des éléments de support (16) à proximité du fuselage (1).

16. Aéronef selon l'une quelconque des revendications précédentes, **caractérisé en ce que** les modules de plancher (50) comportent des parois pare-feu ou cloisons (54) similaires ou des dispositifs de fixation (55) pour fixer des cloisons (54).

17. Aéronef selon l'une quelconque des revendications précédentes, **caractérisé en ce que** les modules de plancher (50), pour les habillages de parois et/ou les habillages de plafond ou similaires, comportent à cet effet des éléments d'habillage (62) ou des dispositifs de montage (63) pour l'habillage de la soute (2).

18. Procédé de réalisation d'un aéronef, comportant
- une soute avec un plancher de soute muni d'éléments de plancher ;
- des éléments de support, en particulier des traverses de plancher, destinés à étayer le plancher de soute et destinés à être reliés à un corps ou à un fuselage de l'aéronef;
- des groupes fonctionnels, en particulier des réservoirs d'eau, des réservoirs d'eaux usées, des racks électroniques ou des groupes électroniques similaires, dans lequel
- les groupes fonctionnels sont montés en dehors de l'aéronef sur des palettes ou sur des structures de support similaires,
- les groupes fonctionnels montés sont chargés dans l'aéronef et sont déplacés sur le plancher de soute vers un lieu de destination dans la soute, et
- les groupes fonctionnels montés sont fixés sur le plancher de soute à l'emplacement du lieu de destination,
**caractérisé en ce que**
les éléments de plancher sont reliés aux éléments de support (16) pour former des modules de plancher (50, 50') préfabriqués.

19. Procédé selon la revendication 18, **caractérisé en ce qu'**au moins des segments de cloisons sont montés sur les palettes ou sur les groupes fonctionnels en dehors de l'aéronef.
